(19) **Europäisches Patentamt**

**European Patent Office**

**Office européen des brevets**

(11) **EP 1 306 754 A1**

(12) **EUROPEAN PATENT APPLICATION**

(43) Date of publication:
**02.05.2003 Bulletin 2003/18**

(51) Int Cl.7: **G06F 9/44**

(21) Application number: **01124364.9**

(22) Date of filing: **23.10.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Telefonaktiebolaget L M Ericsson (Publ)**
**126 25 Stockholm (SE)**

(72) Inventors:
• **Huljenic, Darko**
  **10000 Zagreb (HR)**

• **Caric, Antun**
  **10000 Zagreb (HR)**
• **Lovrek, Ignac**
  **10000 Zagreb (HR)**

(74) Representative: **HOFFMANN - EITLE**
**Patent- und Rechtsanwälte**
**Arabellastrasse 4**
**81925 München (DE)**

(54) **Device and method for software maintenance**

(57)    A software maintenance device (SMD) for an existing application program system ($A_{exist}$) including a plurality (I) of existing software program units ($P_e$) adds new software program units ($P_n$) or replaces existing software program units by new software program units whilst the existing application program system ($A_{exist}$) is running on a target system. Whether or not the newly added or replaced software program units operate correctly is tested by defining test messages to be exchanged between the software program units and by defining expected messages which should be the response to the test messages. An upgrading of the system is only allowed when the actual exchanged monitored messages coincide with the expected messages. Thus, the new software program units can actually be tested in the real target system with test messages of the real target system. Thus, testing and upgrading is possible when the system is in normal operation thus avoiding a testing of the upgraded system only in a test environment.

**FIG.5a**

EP 1 306 754 A1

## Description

## FIELD OF THE INVENTION

The present invention relates to a software maintenance device and method for an existing application program system including a plurality of existing of the program units. The invention also relates to an exchange of a telecommunication system comprising such a device and to a communication system comprising such a device.

In a particular communication system existing software program units may be replaced or one or more new software program units may be added to the existing application program (software) system. The device and method in accordance with the invention are particularly devised to avoid that the upgrading of software in a real environment leads to different results to those obtained when running the upgraded software in a test environment.

## BACKGROUND OF THE INVENTION

Upgrading or maintaining software in an existing application program system is the process of retaining a software product in an applicable and operating state after product delivery. With software maintenance it is possible to implement software changes and enable an evolution of a software system, all this being done in a real environment (target system).

Thus, software maintenance may be defined as the modification of a software product after it has been delivered and implemented in a real environment in order to correct faults, to improve performance or other functional behaviors, or to adapt the product to a changed environment. Thus, software maintenance may be viewed as a customer-invoked process. Modification (maintenance) requests need to be processed in an acceptable time period with an acceptable accuracy. Maintenance (modification) activities can be categorized as corrective maintenance (fault elimination), perfectible maintenance (improvement), adaptive maintenance (e.g. modifying a program to meet new operational circumstances), and a preventive maintenance (i.e. modifying a program to improve its future maintainability). Thus, software maintenance is a complex procedure and is resource-intensive and cost-intensive.

Furthermore, an existing application program system (software) in a complex operational system (for example a communication system) will not only be running on a single device, i.e. an exchange, but it will be distributed over a wide area (several units). Thus, in these circumstances software maintenance is especially complex because it is not easy or even possible to perform a modification, testing and verification (a system test) on the target system if it is remote or to do so whilst the complete system is in operation (whilst the individual software units exchange messages).

For example, in a telecommunication exchange in operation software faults may have appeared and may have been received from a customer. These software faults must be corrected and verified by testing and possibly new functions (new software program units) may have to be implemented into the exchange or into the complete system in operation. However, conventionally the testing of the exchange software and the interaction of it with a possibly newly added software program unit is done on a system test plant (test environment) or in a simulated environment, both of which do not always correspond functionally to the systems which are under operation.

However, when the software is only tested, maintained and possibly upgraded on the system test plant (test environment), faults have to be corrected without checking and verifying them in the real operational environment. Since some of the faults may only occur in the real target system (real environment), such faults cannot be checked and thus. not checked corrections may not solve the existing problems and in some cases could cause serious problems in the exchanges when they are in operation in the real environment.

## DESCRIPTION OF THE RELATED ART

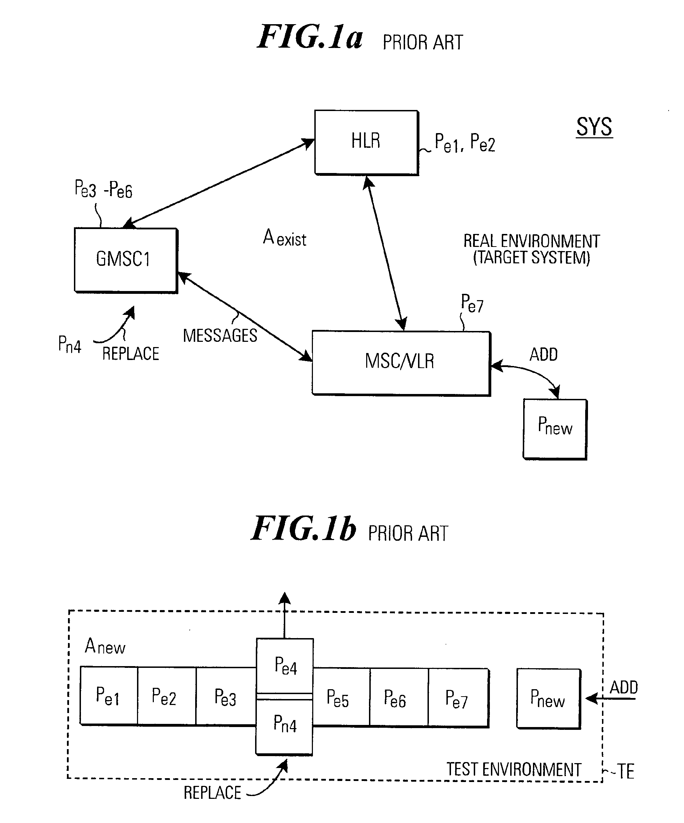

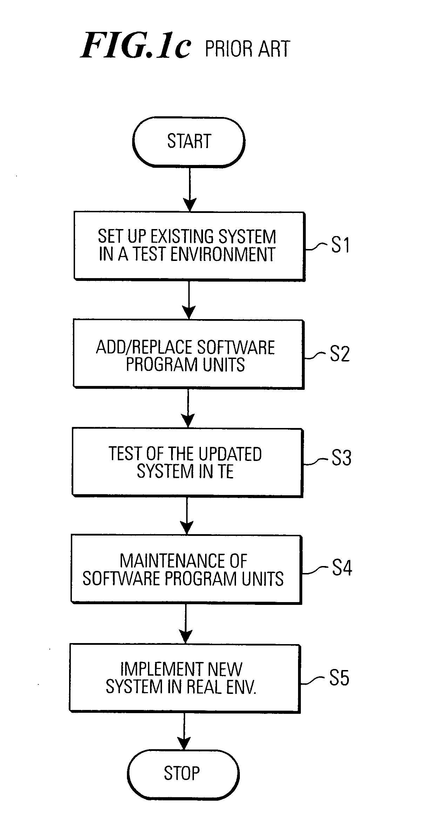

Figs. 1a, 1b, 1c show respectively an overview of a communication system SYS and a method for maintaining software. For example, in Fig. 1a several existing software program units $P_{e1}$, $P_{e2}$; $P_{e3}$ - $P_{e6}$; $P_{e7}$ are running on different units of a telecommunication system SYS (for example on a home location register HLR, a gateway mobile switching centre GMSC1 and a mobile switching centre/visitor location register MSC/VLR). On this existing application program system $A_{exist}$ of course the individual software program units exchange "messages".

Fig. 1b also shows the same existing software program units $P_{e1}$, ... $P_{e7}$ running in a test environment TE. Actually, experiences show that it is possible that a new program unit $P_{new}$ on a target system SYS gives results different to those obtained in the test environment TE. Reasons are mostly in structural and/or functional differences between the test and target systems. Problems are especially serious in the telecommunications environment where systems are spread over a wide area and where network requirements influence specific applications, i.e. software products, within different systems. Furthermore, it is very expensive to maintain test systems containing all software products which have capabilities and possibilities to define all operating environments (networks) and therefore there are problems to find an appropriate test and verification environment.

Therefore, the conventional method in maintaining software, for example correcting faults or adding new software, in a real environment is to set up the existing system in a test environment (step S1 in Fig. 1c), to then add/remove software program units (step S2 in Fig. 1c) such as replacing the existing software program unit $P_{e4}$ with a new software program unit $P_{n4}$ or with a new software program unit $P_{new}$ and to then test the updated or upgraded system solely in the text environment (step S3 in Fig. 1c). When the complete existing application program system $A_{new}$ having the program unit $P_{e4}$ replaced by a new program unit $P_{n4}$ and having a new program unit $P_{new}$ added is tested in the test environment TE indeed all the interactions, interoperability and fault-free operation of all units can be checked. If it is necessary, in step S4 in Fig. 1c, the maintenance of the software program units can be performed, e.g. by correcting faults determined when running the system in the test environment TE. When the operation was satisfactory within the text environment TE, the existing software unit $P_{e4}$ may be replaced in the gateway mobile switching center GMSC and the new program unit $P_{new}$ may be added to the MSC/VLR in Fig. 1a (step S5 in Fig. 1c).

However, as was mentioned before, after implementing the software changes on the target system (real environment) the complete system may indeed functionally operate differently to what has been previously detected on the test environment TE. Therefore, it would be preferable if the software could be maintained (corrected, upgraded, improved etc.) on the real target system, in which the actual software runs under real operation conditions.

## SUMMARY OF THE INVENTION

As described above, despite the fact a test of an upgraded or amended application program system may be successful in a test environment, the new application program system running on the target system, for example in a communication system or in an exchange, may give results different to those obtained in the test environment. Therefore, it would be desirable to conduct the complete maintenance of the software within the real environment rather than first tested within the test environment and then implemented in the target system.

Therefore, the object of the present invention is to provide a software maintenance device and a software maintenance method with which maintenance, testing and verification of software program units can be conducted on a target system to improve the software maintenance when the software system is operating in a normal operation in the real environment.

This object is solved by a software maintenance device for an existing application program system including a plurality of existing software program units, comprising a test system building device for building a test application program system comprising at least one of the existing software program units of the existing application program system and at least one new software program unit; a test message defining device for defining at least one test message to be exchanged between the at least one new software program unit and at least one other existing program unit of the built test application program system; an expected message defining device for defining at least one expected message; to be exchanged between the at least one new software program unit and the at least one other existing program unit in response to the test message; an running device for test running the test application program system with the at least one test message; an exchanged message monitoring device for monitoring the messages exchanged in the test application program system in response to the at least one test message; a comparing device for comparing the monitored messages with the expected messages; and an updating device for updating the existing software program system with the at least one new software program unit when the compared messages match.

Furthermore, this object is solved by a software maintenance method for an existing application program system including a first plurality of existing software program units, comprising the following steps: building a test application program system comprising at least one of the existing software program units of the existing application program system and at least one new software program unit; defining by a test message defining device at least one test message to be exchanged between the at least one new software program unit and at least one other existing program unit of the built test application program system; defining by an expected message defining device at least one expected message to be exchanged between the at least one new software program unit and the at least one other existing program unit in response to the test message; test running the test application program system with the at least one test message by a running device; monitoring by an exchanged message monitoring device the messages exchanged in the test application program system in response to the at least one test message; comparing by a comparing device said monitored messages with the expected messages; and updating by an updating device the existing software program system with the at least one new software program unit when the compared messages match.

Furthermore, the object is solved by a computer-readable medium having computer-readable code embodied therein code means for building a test application program system comprising at least one existing software program unit of an existing application program system and at least one new software program unit; code means for defining at least one test message to be exchanged between the at least one new software program unit and at least one other existing program unit of the built test application program system; code means for defining at least one expected message to be exchanged between the at least one new software program unit and the at least one other existing program unit in response to the test message; code means for test running the test application program system with the at least one test message; code means for monitoring the messages exchanged in the test application program system in response to the at least one test message; code means for comparing the monitored messages with the expected messages; and code means updating the existing software program system with the at least one new software program unit when the compared messages match.

In accordance with the invention test messages to be exchanged between at least one new software program unit and at least one other existing program unit are defined when running the test application program system on the target system. An exchanged message monitoring means then monitors the messages exchanged in the test application program system. A comparing device compares the actual messages with the expected messages and the existing software program unit is updated when the compared messages match. Thus, a new software program unit, i.e. a real newly added software program unit or a software program unit replacing an already existing software program unit, can be naturally tested in the real operating target system because typical test messages and typical expected responses to these messages can be compared with the real behaviour of the software unit in the target system.

Preferably, the test system building device is adapted for carrying out one or more of the following building functions: a unit insertion function by which to the existing software program units a new software program unit is added; a group insertion function by which to the existing software program units a group of new software program units is added; a unit replacement function by which one of the existing software program units is replaced by one new software program unit; and a group replacement function by which a group of existing software program units is replaced by a group of new software program units. Thus, in a very flexible manner not only a single software program unit can be replaced or added but it is also possible to perform the insertion and replacement in groups of software program units.

Further preferably, a test application program system portion defining device is provided for defining a portion of the test application program system to be tested wherein said test message defining device defines at least one test message to be exchanged between the at least one new software program unit and the other existing program units of the portion. Thus, also a portion of the test application program system can be tested.

Further advantageous embodiments and improvements of the invention may be taken from the dependent claims. Hereinafter, the invention will be described with reference to its embodiments and by considering the attached drawings.

## BRIEF DESCRIPTION OF THE DRAWINGS

In the drawings, the same or similar reference numerals denote the same or similar parts throughout. In the drawings:

Fig. 1a    shows a typical scenario of a communication system SYS where software program units $P_{e1}$-$P_{e7}$ are incorporated in units HLR, GMSC1, MSC/VLR of the communication system SYS;

Fig. 1b    shows the existing software program units $P_{e1}$-$P_{e7}$ in a test environment TE, in which the software program unit $P_{e4}$ is replaced by a new software program unit $P_{n4}$ and wherein a new software program unit $P_{new}$ is added;

Fig. 1c    shows a flow chart of software maintenance in the system shown in Fig. 1a, 1b, in accordance with the prior art;

Fig. 2    shows a block diagram of the communication system SYS comprising in accordance with the invention a software maintenance device SMD;

Fig. 3    shows as a block diagram the building of a test application program system $A_{new}$ on a target system wherein the test application program system Anew comprises a few system program units of an existing application program system $A_{exist}$ and some new program units of a new system $S_{new}$;

Fig. 4a    shows the exchange of messages $M_{snd}$; $M_{req}$ in the existing software program system $A_{exist}$;

Fig. 4b    shows the exchange of messages in the test application program system $A_{new}$;

Fig. 5a    shows an overview of the software maintenance device SMD in accordance with the invention;

Fig. 5b    shows a flow chart of the software maintenance method in accordance with the invention;

Fig. 6a    shows further details of an embodiment of the test system building device TSBD shown in Fig. 5a; and

Fig. 6b    shows functional specification tables TBL1, TBL2.

Hereinafter, embodiments of the invention will be described with reference to the drawings.

## PRINCIPLE OF THE INVENTION

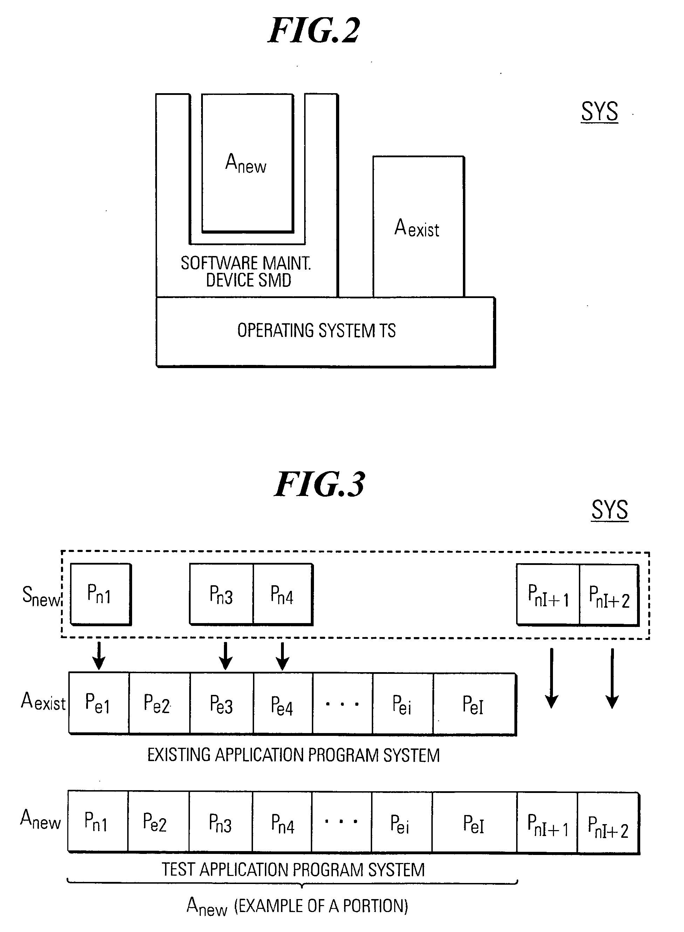

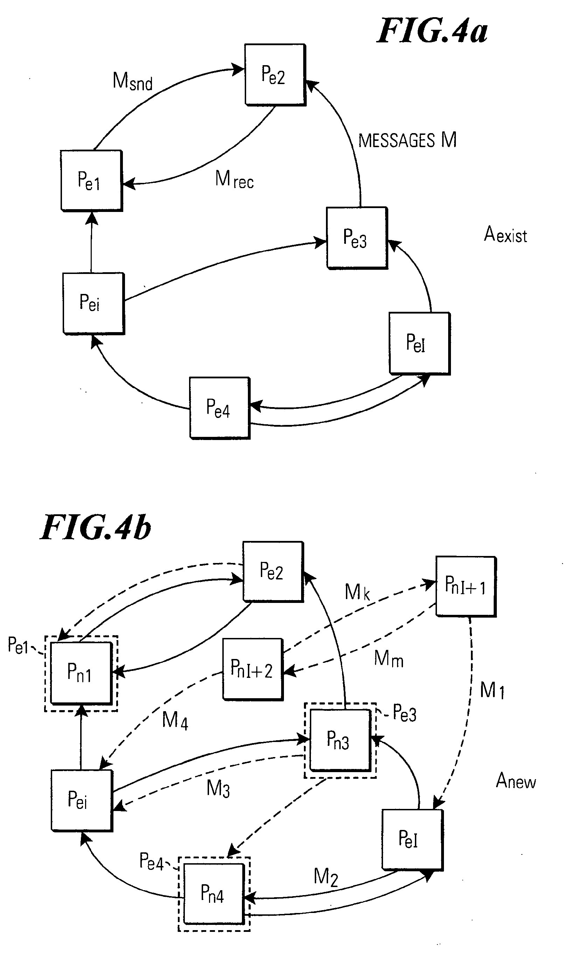

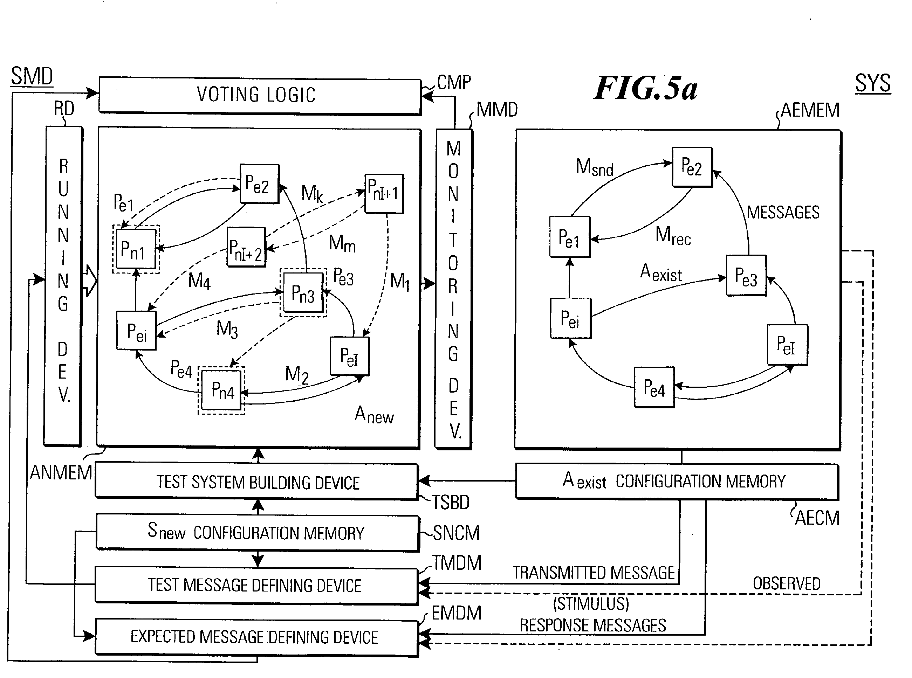

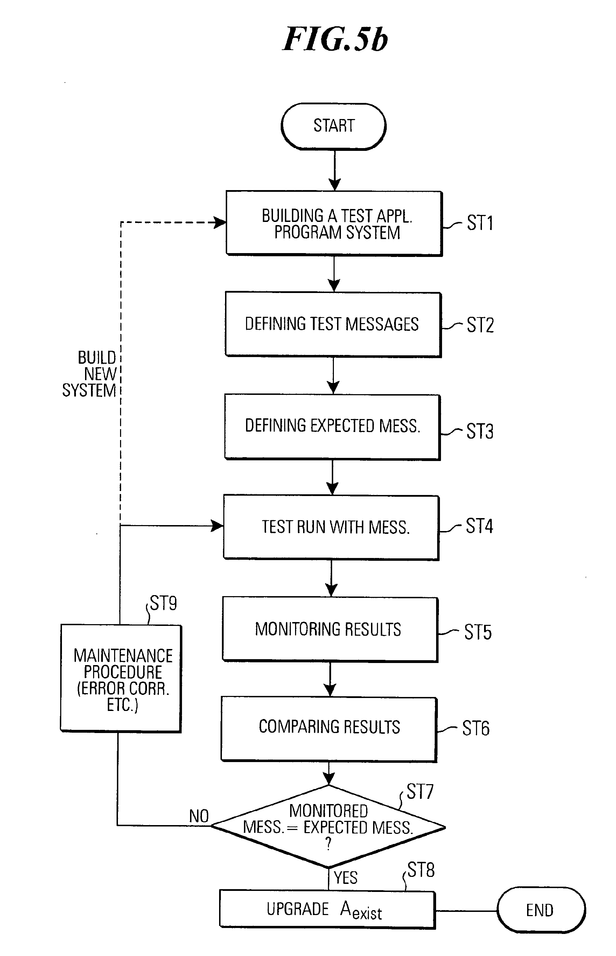

Fig. 5a shows a block diagram of a software maintenance device SMD in accordance with the invention and Fig. 5b shows a flow chart of the software maintenance method in accordance with the invention. Fig. 2 shows a principle overview of the arrangement of the software maintenance device SMD in a communication system SYS. Fig. 3 and Fig. 4a, 4b show the building of a new test application program system and the exchange of messages both being carried out by the software maintenance device and method of Fig. 5a, 5b.

As shown in Fig. 2, the software maintenance device SMD operates as part of the real communication system SYS. On an operating system TS established in the real environment the software maintenance device SMD and the existing application program system $A_{exist}$ are operating. On top of the software maintenance device SMD a new application system $A_{new}$ is placed. Fig. 2 thus indicates and expresses that the software maintenance device SMD in the real target system builds a test system $A_{new}$ and tests this system whilst the existing system $A_{exist}$ still operates in the target system. As will be understood from Fig. 5a, the actual test application system $A_{new}$ is formed on the basis of the existing system $A_{exist}$ and possibly some new program units (as indicated in the configuration memory SNCM). The existing system $A_{exist}$ and the new system $A_{new}$ are also shown in Fig. 4a and Fig. 4b.

Hereinafter, the software maintenance device SMD is described with reference to Fig. 5a, Fig. 4a, 4b and Fig. 3. Fig. 5a may also be seen analogous to the schematic drawing in Fig. 2. Most importantly, as indicated with "SYS" the software maintenance device SMD and the software maintenance method in accordance with the invention operate in the real target system, i.e. for example in the communication system, in which already some existing program software units operate. However, in Fig. 4a, 4b and also in Fig. 5a it should be understood that each of the program units $P_{e1}$, ..., $P_{ei}$, $P_{el}$ and the new software units $P_{n1}$, $P_{n3}$, $P_{n4}$, ..., $P_{nl+2}$ may be distributed arbitrarily over the individual units of the communication system such as for example GMSC1, HLR, MSC/VLR etc. Important is that of course, as in any software system, the individual program units P exchange messages M, i.e. they exchange sent messages $M_{snd}$ and received messages $M_{rec}$.

Despite the fact that the software units P may be distributed over several units in the communication system SYS, of course each of the program units may be placed in some kind of memory in the individual units. In Fig. 5a this is indicated with the first memory AEMEM (existing system program unit memory) which stores the existing system comprising a plurality I of existing software program units $P_{e1}$, ..., $P_{ei}$, $P_{el}$. Actually the software maintenance device SMD is to carry out a maintenance for this existing application program system $A_{exist}$.

In accordance with the invention the software maintenance device SMD comprises a test system building device TSBD for building a test application program system $A_{new}$ comprising at least one of the existing software program units of the existing application program system and at least one new software program unit. The new software program unit may be stored in the $S_{new}$ configuration memory SNCM. Of course, as explained above, the new software program unit $S_{new}$ may indeed be a new software program unit $P_{new}$ to be added to all the existing program units of the $A_{exist}$ system. However, the new software program unit may also be the program unit $P_{n1}$ replacing an original existing software program unit $P_{e1}$. In Fig. 4b the replacement is indicated with dashed lines around the respective unit. Thus, as can be seen from a comparison of Fig. 4a and Fig. 4b, the test system building device TSBD has built a new test application program system $A_{new}$ consisting of existing software program units:

$P_{e2}$, $P_{ei}$, $P_{el}$ of replaced new software software program units:

$P_{en1}$, $P_{n3}$, $P_{n4}$. and of newly added software program units:

$P_{nl+2}$, $P_{nl+1}$.

Whilst Fig. 4b shows the most general case with replaced existing software units and added new software units, it may be understood that of course the test application program system $A_{new}$ consists of at least one of the existing software program units and at least one new software program unit. That is, in the simplest case the test application program system can comprise one original software program unit and at least one new software program unit whilst the new software program unit may be replacing one of the existing software program units or may in fact be a newly added software unit.

As will be described further below, the incorporation, testing and maintenance of software in accordance with the invention is based on the specification and monitoring of messages exchange between software program units operating in the real system. In order to be able to allow a specification and monitoring of such test messages, it is necessary that the test application program system comprise at least two different software units. As was the case for the first memory AEMEM, it may be considered that the new software program system $A_{new}$ is stored in a second memory ANMEM distributed over one or several units of the communication system SYS. Thus, the memory ANMEM may be called the new software program system memory. As described above, the test system building device TSBD carries out step ST1 as shown in Fig. 5b.

As shown in Fig. 4a, 4b and also shown in the second memory ANMEM in Fig. 5a, the program units P within the built test application program system $A_{new}$ cross-communicate by way of exchanging messages (e.g. a message passing). The problems can be caused by inaccurate program units or an inaccurate communication between program units and are demonstrated as messages containing incorrect parameters, incorrect messages or an incorrect message sequence. To test out the behaviour of existing software program units together with replaced or new software program units, the software maintenance device SMD comprises a test message defining device TMDM for defining at least one test message $M_{snd}$; $M_1$, $M_2$, $M_k$, ..., $M_m$ to be exchanged between the at least one new software program unit $P_{newj}$ and at least one other existing program unit $P_{e1}$, ..., $P_{el}$ of the built test application program system $A_{new}$.

As shown in Fig. 5a, since the test message defining device TMDM defines the messages for the special configuration of the built test system, it communicates with the memory SNCN, in which the configuration for the new system is stored. Likewise, the memory AECM stores the configuration of the existing application program system $A_{exist}$. Therefore, the test message defining device TMDM may also receive information about transmitted messages from the memory AECM in order to build the test messages. A running device RD is provided for test running the test application program system $A_{new}$ with the at least one test message M1, M2, Mk, ..., Mm.

Furthermore, an expected message defining device EMDM is provided for defining at least one expected message $M_{rec}$; $M_1$, $M_2$, $M_k$, ..., $M_m$ to be exchanged between the at least one new software program unit $P_{ni}$ and the at least one other existing program unit $P_{ei}$ in response to the test message $M_{snd}$; $M_1$, $M_2$, $M_k$, ..., $M_m$. As shown in Fig. 5a, such response messages can be in fact the "old" response messages from software program units of the existing system $A_{exist}$. However, the test messages and the response messages may also be "observed" messages from running the existing application program system $A_{exist}$, as shown in Fig. 5a.

An exchanged message monitoring device MMD is provided for monitoring the messages exchanged in the test application program system $A_{new}$ in response to the at least one test message. A comparing device CMP (a so-called voting logic) is provided for comparing the monitored messages with the expected messages. An updating of the existing software program system $A_{new}$ with the at least one new software program unit $P_{new}$ takes place by an updating device when the compared messages match.

Thus, from formal point of view two application systems $A_{exist}$ and $A_{new}$ are formed wherein the new or a test application program system $A_{new}$ is created by replacing and/or adding a part of software in the existing system which creates $A_{exist}$ with a software $S_{new}$. The existing system $A_{exist}$ is operative as long as it will be replaced by the new application system $A_{new}$. If and when the new application system $A_{new}$ can fulfil the required functionality it becomes operative and the old application system $A_{exist}$ is disconnected. Whether it fulfils the required functionality is tested with the test message sending and comparing the expected messages.

During the testing of the built test system one or more test messages are defined, such as

$$M = (M_1, ..., M_k, ..., M_m)$$

to be exchanged between the program units $P_{ni}$ and other existing program units in the tested system. The correlation or comparison between the received messages and the expected messages ($M_{sent}$ - $M_{receive}$) yield the information whether $A_{new}$ can fulfil the required functionality. Furthermore, it is possible to define message sequences

$$SM = (SM_1, ..., SM_p, SM_s).$$

This information is also available at the end of running the test system with the test messages.

## EXAMPLE OF THE SOFTWARE MAINTENANCE METHOD

Hereinafter, with particular reference to Fig. 3; 4a, 4b; 6a and 5b an example of the software maintenance method will be described with further details. From this the preferred functionalities of the test system building device TSBD, the preferred functionalities of applying and monitoring messages, and the preferred details of stepwise upgrading or updating software program units will be understood.

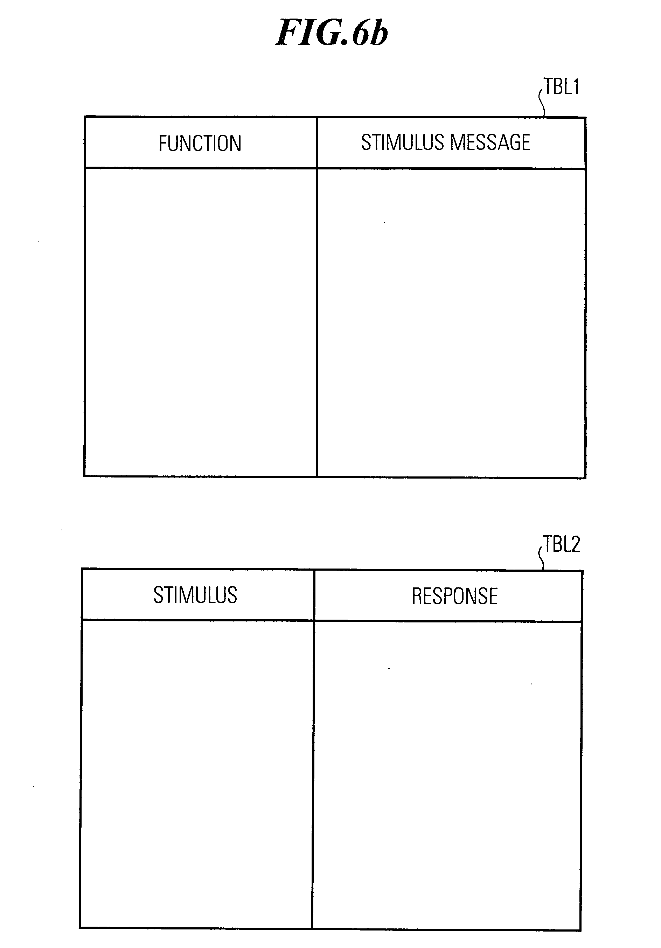

Fig. 4a and the second row in Fig. 3 show a typical example of an existing software program system $A_{exist}$ comprising a number of existing software program units $P_{e1}$, $P_{e2}$, $P_{e3}$, $P_{e4}$, ..., $P_{ei}$, $P_{el}$. As was explained with reference to Fig. 1a, the existing software program units $P_e$ may be imagined, for example in a telecommunication system SYS, to be distributed over several separate units of the telecommunication system, for example amongst mobile switching centres MSC/VLR, home location registers HLR and any other exchanges present in the telecommunication system SYS. In this arrangement of existing software program units these units will interact by means of exchanging, e.g. transmitting and receiving, messages $M_{snd}$, $M_{rec}$. For example, if the program unit $P_{e2}$ is the home location register HLR and $P_{e1}$ is a mobile switching centre MSc/VLR, the request message $M_{snd}$ could be a "provide roaming number PRN message" whilst the response message $M_{rec}$ will be a "roaming number RN message". The request or stimulus message can be defined on the basis of a functional specification table TBL1 for each software program unit as shown in Fig. 6b.

In step ST1 the test system building device TSBD will build a test application program system $A_{new}$ parallel i.e. in addition to the existing software program system $A_{exist}$. For this purpose, the test system building device TSBD looks up the $S_{new}$ configuration memory SNCM to obtain information about how the test application program system $A_{new}$ is to be built from the existing system $A_{exist}$ and the new software program units $S_{new}$. In the case of Fig. 3 the replacement or new software program units are replacement software program units $P_{n1}$, $P_{n3}$, $P_{n4}$ and new software program units $P_{nl+1}$, $P_{nl+2}$. Depending on what is indicated in the configuration memory, one or more of these software program units of $S_{new}$ may be separately inserted and replaced or be inserted and replaced as a group.

Therefore, the test system building device may have a unit insertion function device INPNNEW by which to the existing software program units $P_e$ a new software program $P_{nl+1}$ or $P_{nl+2}$ is added. The insertion of the new program unit $P_{nl+1}$, $P_{nl+2}$ is based on correction or function changes in an existing program unit. Likewise, the test system building device may have a unit replacement function device REPPNEW by which one of the existing software program units, e.g. $P_{e1}$, $P_{e3}$, $P_{e4}$, is replaced by a corresponding new software program unit $P_{n1}$, $P_{n3}$, $P_{n4}$ of the new configuration $S_{new}$. Furthermore, the test system building device TSBD may comprise a group insertion function INGROUP by which to the existing software program unit a group of new software program units such as $P_{nl+1}$, $P_{nl+2}$ is added. In this case, the two software program units are inserted as a group. Furthermore, the test system building device TSBD can comprise a group replacement function REPGROUP by which a group of existing software program units such as $P_{e1}$, $P_{e3}$, $P_{e4}$ is replaced by a group of new software units $P_{n1}$, $P_{n3}$, $P_{n4}$. Most likely, in a complex program system a group of new software units is added or replaces a group of existing software program units. Fig. 4b and the bottom arrow in Fig. 3 shows the new system $A_{new}$ together with examples of message exchanges and message receipts.

Having defined the test system $A_{new}$ to be tested, it has now to be estimated if Snew solves the problem. Therefore, in step ST2 the test message defining device TMDM defines the test messages and in step ST3 the expected message defining device EMDM defines the expected messages to be exchanged between the program units. In step ST4 the running device RD runs the test application program system $A_{new}$ with the test messages and in step ST5 the messages exchanged between the program units in response to the messages (stimulus) are monitored. In step ST6 the results are compared and if in step ST7 the monitored messages correspond the expected messages the existing system $A_{exist}$ can be upgraded in step ST8.

In steps ST2 and ST3 test messages and the expected messages can be defined on the basis of a functional specification table TBL1, TBL2 relating to each software program unit, as shown in Fig. 6b.

Furthermore, when defining the expected messages in step ST3, the expected message defining device EMDM can define as the expected message a message received from an old software program unit in response to transmitting a test message thereto. That is, if an existing software program unit e.g. $P_{e1}$ is replaced by a new program unit $P_{n1}$, the new software program unit $P_{n1}$ when being linked in the new system Anew should react in a similar manner as the "old" software program unit $P_{e1}$. Thus, the running device RD can run the existing and the new software program unit simultaneously wherein the expected message defining device EMDM defines as the expected messages the messages produced by the software program units of the existing application program system.

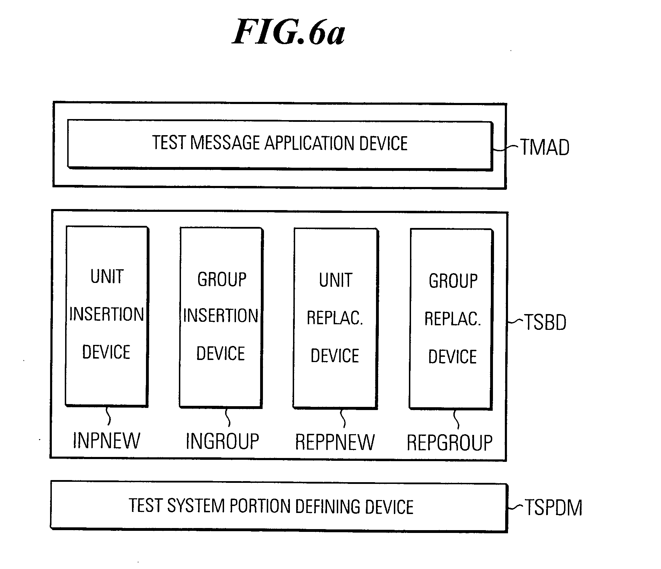

Furthermore, as shown in Fig. 6a, a test application program system portion defining device TSPDM can be provided for defining a portion of the test application program system $A_{new}$ to be tested, wherein the test message defining device TMDM defines at least one test message to be exchanged between the at least one new software program unit $P_{ni}$ and the other existing program units of the portion. This minimizes the number of massages necessary to be exchanged between the program units in order to verify their functionality. For example, a sub-portion $A_{new'}$ may be formed by $P_{n1}$, ..., $P_{n4}$, $P_{ei}$ and $P_{el}$ and test messages are applied and monitored only with respect to this portion.

Thus, by building the test system and by defining and exchanging as well as monitoring and comparing test messages and expected messages, it can be checked whether $S_{new}$ cooperates with other parts of the existing system $A_{exist}$ within $A_{new}$ in the real (target) system and in a proper manner. That is, Anew is induced by test message (samples) and the response is compared with the result gained during the system test on the basis of a voting logic between the received results. In addition to testing whether $S_{new}$ within $A_{new}$ correctly functions by means of the sending of test messages and comparing the responses with respective messages, it is also possible to compare the functioning of the existing system $A_{exist}$ with the new system $A_{new}$ on the real system. That is, $A_{exist}$ and $A_{new}$ are both prompted with the same test messages and then the messages exchanged in response to the test messages are compared for both systems $A_{exist}$, $A_{new}$. In this case, the expected messages for the new system $A_{new}$ are the messages produced by the software program units of the existing application program system $A_{exist}$. This is indicated with the dashed lines in Fig. 5a denoted as "observed".

Thus, transmitting to said one ore more new software program units the test messages wherein the exchange message monitoring device MMG monitors the messages received from the new software program units in response to the test message. Rather than directly applying messages to the software units, the test message application device TMAD is also adapted for triggering or enabling an existing software program unit or another new software program unit to transmit the test message to the new software program unit. Thus, rather than directly applying the test messages to the program units, the existing or new software program units can be triggered to transmit these messages.

With the above functionalities of the software maintenance device SMD and the method in accordance with the invention, the following functions can be summarized:

- the whole test application system Anew (or its selected sub-group $A_{new}$') undergoes the system test and when the response (monitored) messages correspond to the expected messages (for example obtained from testing the existing system $A_{exist}$), than the new application system $A_{new}$ does not interfere with the existing application system $A_{exist}$. Thus, the upgrading step ST8 can be carried out;

- the system test can be carried out by still having the new system $S_{new}$ separate from the existing system $A_{exist}$, i.e. the old units of $A_{exist}$ are still operating in the target system, or alternatively the test system is built by creating $A_{new}$ with the new program (S) $S_{new}$ and copying program units $P_e$ from $A_{exist}$. Thus, the test of the functionalities of the units of $S_{new}$ can be carried out monitoring messages between $S_{new}$ and the actual existing system $A_{exist}$ or by actually creating $S_{new}$ with a copy of the $A_{exist}$ software units. In both cases the functionalities and functioning of $S_{new}$ can be tested with the test message transmission and monitoring;

- the system test can be carried out by loading an expected group of messages and/or sequences of messages for the new system $A_{new}$ or for a tested part of the new system $A_{new}$;

- a message tracing procedure, i.e. the following of message exchanges through several software program units, can be performed. Thus, it can be verified how messages and response messages are sequentially transferred from one software program unit to a next software program unit;

- having defined the stimulus for all software program units, the complete new test system $A_{new}$ is tested with all test messages;

- the results (response messages) gained by performing $A_{new}$ and expected results are compared on the basis of a voting logic;

- $A_{new}$ and $A_{exist}$ are simultaneously tested with the same messages and the response messages are observed and compared.

Based on the results in step ST7, either the system will gradually upgraded in step ST8 or further maintenance procedures (error correction procedures etc.) may be performed in step ST9 whereafter steps ST1-ST7 are repeated. The following cases are possible:

In the first case, a software program unit $P_n$ is replaced by the program unit $P_e$. In this case, the part of $A_{exist}$ with which $P_n$ directly or indirectly cooperates has to be placed in the software maintenance device SMD. Thus, every new program unit $P_n$ arranged in the first memory ANMEM will have added to it all the program units of $A_{exist}$ with which it directly or indirectly cooperates. Then, the software maintenance device MD has created the new software program system $A_{new}$ from $P_n$ and the relevant units of $A_{exist}$. This new system can then be passed over to be run by the operating system TS (see Fig. 2).

In a second case a group of program units $P_e$ are replaced by a group of program units $P_n$. In this case, one of the units from Snew (e.g. $P_{n1}$, $P_{n3}$, $P_{n4}$) is arranged in the maintenance shell (the software maintenance device SMD) as well as a part of the units of $A_{exist}$ with which the $P_n$ new software program units directly or indirectly cooperate. The software finally to be run by the operating system TS is then extended step by step in the maintenance shell by adding new units from $S_{new}$ and other units from $A_{exist}$ with which the respectively newly added unit from $S_{new}$ cooperates. Then, the correct operation of the new and the existing software is carried out with the test messages. Thus, the system $A_{new}$ shown in Fig. 2 and in Fig. 5a may gradually step by step set up by adding and replacing and testing the performance of the new software program units with the existing software program units.

## FURTHER EMBODIMENTS

Although the software maintenance device SMD and the software maintenance method has been described above by referring to the individual blocks shown in Fig. 5a and Fig. 5b independently from their actual implementation, it should be noted that the software maintenance device and the software maintenance method may be carried out by a program having instructions adapted to carry out all the method steps described above and shown in Fig. 5b. Furthermore, a computer program product stored on a computer readable storage medium can comprise code means adapted to carry out all the steps described above and shown in Fig. 5b. Furthermore, a computer readable medium may have a program recorded thereon, wherein the program is to make the computer execute procedures to carry out the above described steps. The computer readable medium may have a computer readable code embodied therein, which comprises as code means respectively the above-described devices, which are also shown in Fig. 5a.

Thus, it should be understood that all the above-described functionalities of the software maintenance device SMD may be carried out by computer programs recorded on computer readable media.

**INDUSTRIAL APPLICABILITY**

As described above, the invention enables remote maintenance activities on a target system and thus the invention can be used for software testing and upgrade when the target system is in its normal operation. This is possible by building a test system gradually or completely with the new software program units whilst the existing system is still running.

Such a software maintenance device and software maintenance method can be used in all systems in which an existing application program system having a plurality of existing software program units is to be amended or supplemented with new software program units. Thus, the invention is applicable to any software system, which has its software program units centralized at a common side, such as on a local computer, or has its software program units distributed over several units in a system.

The invention has particular application in communication systems, for example in an exchange of a telecommunication system, where several software program units belonging to the same application system are distributed over several units. However, the invention is generally applicable to any software system.

Reference numerals in the claims only serve clarification purposes.

**Claims**

1. A software maintenance device (SMD) for an existing application program system ($A_{exist}$) including a plurality (I) of existing software program units ($P_{e1}$, $P_{e2}$, ..., $P_i$, ..., $P_I$), comprising:

   **a)** a test system building device (TSBD) for building a test application program system ($A_{new}$) comprising at least one of the existing software program units of the existing application program system and at least one ($S_{new}$) new software program unit ($P_{n1}$, $P_{n2}$, ..., $P_{nj}$, ..., $P_{nI}$) ;

   **b)** a test message defining device (TMDM) for defining at least one (M) test message ($M_{snd}$; $M_1$, $M_2$, $M_k$, ..., $M_m$) to be exchanged between the at least one new software program unit ($P_{nj}$) and at least one other existing program unit ($P_{ei}$) of the built test application program system ($A_{new}$) ;

   **c)** an expected message defining device (EMDM) for defining at least one (M) expected mes-

sage ($M_{rec}$; $M_1$, $M_2$, $M_k$, ..., $M_m$) to be exchanged between the at least one new software program unit ($P_{ni}$) and the at least one other existing program unit ($P_i$) in response to the test message ($M_{snd}$; $M_1$, $M_2$, $M_k$, ..., $M_m$) ;

   **d1)** an running device (RD) for test running the test application program system ($A_{new}$) with the at least one test message ($M_1$, $M_2$, $M_k$, ..., $M_m$) ;

   **d2)** an exchanged message monitoring device (MMD) for monitoring the messages exchanged in the test application program system ($A_{new}$) in response to the at least one test message;

   **e)** a comparing device (CMP) for comparing the monitored messages with the expected messages ($M_{rec}$) ; and

   **f)** an updating device (UP) for updating the existing software program system ($A_{new}$) with the at least one new software program unit ($P_{new}$) when the compared messages match.

2. A device according to claim 1,
   ***characterized in that***
   said running device (RD) comprises a test message application device (TMAD) for transmitting to said one or more new software program units said test message ($M_1$, $M_2$, $M_k$, ..., $M_m$) wherein said exchanged message monitoring device (MMD) monitors the messages received from said new software program unit ($P_{nj}$) in response to said test message.

3. A device according to claim 2,
   ***characterized in*** that
   said test message application device (TMAD) is adapted for enabling an existing software program unit or another new software program unit to transmit said test message to said new software program unit.

4. A device according to claim 1,
   ***characterized in*** that
   said test system building device ($T_{SBD}$) is adapted for carrying out one ore more of the following building functions:

   **a1)** a unit insertion function (INPNEW) by which to the existing software program units ($P_{e1}$, $P_{e2}$, ..$P_{ei}$, ..$P_{el}$) a new software program unit ($P_{ni}$) is added;

   **a2)** a group insertion function (INGROUP) by which to the existing software program units ($P_{e1}$, $P_{e2}$, ..., $P_{ei}$, ..., $P_{en}$) a group of new software program units ($S_{new}$; $P_{n1}$, $P_{n2}$, $P_{ni}$, $P_{nl}$) is

added;

**a3)** a unit replacement function (REPPNEW) by which one of the existing software program units ($P_{e1}$, $P_{e2}$, ..., $P_{ei}$, ..., $P_{en}$) is replaced by one new software program unit ($S_{new}$; $P_{n1}$, $P_{n2}$, $P_{ni}$, $P_{nl}$) ; and

**a4)** a group replacement function (REPGROUP) by which a group of existing software program units ($P_{e1}$, $P_{e2}$, ..., $P_{ei}$, ..., $P_{en}$) is replaced by a group of new software program units ($S_{new}$; $P_{n1}$, $P_{n2}$, $P_{ni}$, $P_{nn}$).

5. A device according to claim 1, ***characterized in that*** a test application program system portion defining device (TSPDM) is provided for defining a portion ($A_{new'}$) of the test application program system ($A_{new}$) to be tested, wherein said test message defining device (TMDM) defines at least one test message ($M_1$, $M_k$, $M_m$) to be exchanged between the at least one new software program unit ($P_{ni}$) and the other existing program units ($P_{ei}$) of the portion ($A_{new'}$).

6. A device according to claim 1, ***characterized in that*** said test message defining device (TMDM) is adapted for defining test message sequences (SM; $SM_1$, $SM_p$, $SM_s$).

7. A device according to claim 1, ***characterized in that*** said test message defining device (TMDM) is adapted for defining said at least one test message ($M_{snd}$; $M_1$, $M_2$, $M_k$, ..., $M_m$) on the basis of a functional specification table (TBL1) relating to each software program unit.

8. A device according to claim 1, ***characterized in that*** said expected message defining device (EMDM) is adapted for defining said at least one expected message ($M_{snd}$; $M_1$, $M_2$, $M_k$, ..., $M_m$) on the basis of a functional specification table (TBL2) relating to each software program unit.

9. A device according to claim 1, ***characterized in that*** said expected message defining device (EMDM) is adapted for defining as said expected message ($M_{rec}$ ; $M_1$, $M_2$, $M_k$, ..., $M_m$) a message received from an old software program unit ($P_{ei}$) in response to transmitting a test message thereto.

10. A device according to claim 1, ***characterized in that***

said running device (RD) is adapted for running said existing and said new software program units simultaneously wherein said expected message defining device (EMDM) defines as the expected messages the messages produced by the software program units of the existing application program system ($P_e$).

11. A device according to claim 1, said updating device (UP) is adapted for replacing an existing by a new software program unit one by one.

12. A device according to claim 11, ***characterized in that*** said updating device (UP) is adapted for replacing old software program units by new software program units in a sequence as groups.

13. An exchange of a telecommunication system, comprising a device according to one or more of claims 1-12.

14. A communication system (SYS) comprising a device according to one or more of claims 1-12, ***characterized in that*** said test system building device (TSBD) is adapted for building said test application program system ($A_{new}$) from existing software program units ($P_{ei}$) and new software program unit(s) which are remotely and/or locally distributed over one or more system units of the telecommunication system.

15. A software maintenance method (SMD) for an existing application program system ($A_{exist}$) including a first plurality (I) of existing software program units ($P_{e1}$, $P_{e2}$, ..., $P_i$, ..., $P_l$), comprising the following steps:

**a)** building (ST1) a test application program system (Anew) comprising at least one of the existing software program units of the existing application program system and at least one ($S_{new}$) new software program unit ($P_{n1}$, $P_{n2}$, ..., $P_{nj}$, ..., $P_{nl}$) ;

**b)** defining (ST2) by a test message defining device (TMDM) at least one (M) test message ($M_{snd}$; $M_1$, $M_2$, $M_k$, ..., $M_m$) to be exchanged between the at least one new software program unit ($P_{nj}$) and at least one other existing program unit ($P_{ei}$) of the built test application program system ($A_{new}$) ;

**c)** defining (ST3) by an expected message defining device (EMDM) at least one (M) expected message ($M_{rec}$; $M_1$, $M_2$, $M_k$, ..., $M_m$) to be exchanged between the at least one new software

program unit ($P_{ni}$) and the at least one other existing program unit ($P_i$) in response to the test message ($M_{snd}$; $M_1$, $M_2$, $M_k$, ..., $M_m$) ;

**d1)** test running (ST4) the test application program system ($A_{new}$) with the at least one test message ($M_1$, $M_2$, $M_k$, ..., $M_m$) by a running device (RD) ;

**d2)** monitoring (ST5) by an exchanged message monitoring device (MMD)the messages exchanged in the test application program system ($A_{new}$) in response to the at least one test message;

**e)** comparing (ST6) by a comparing device (CMP) said monitored messages with the expected messages ($M_{rec}$) ; and

**f)** updating (ST7) by an updating device (UP) the existing software program system ($A_{exist}$) with the at least one new software program unit ($P_n$) when the compared messages match.

**16.** A method according to claim 15,
*characterized in that*
said test running step d1) comprises a step of transmitting (ST41) to said one or more new software program units said test message ($M_1$, $M_2$, $M_k$, ..., $M_m$) and a step of monitoring (ST42) the messages received from said new software program unit ($P_{nj}$) in response to said test message.

**17.** A method according to claim 16,
*characterized in that*
test running step d1) comprises a step of enabling an existing software program unit or another new software program unit to transmit said test message to said new software program unit.

**18.** A method according to claim 15,
*characterized in that*
said test system building step a) comprises one or more of the following function steps:

**a1)** a unit insertion function step (INPNEW) by which to the existing software program units ($P_{e1}$, $P_{e2}$, ..., $P_i$, ..., $P_l$) a new software program unit ($P_{ni}$) is added;

**a2)** a group insertion function step (INGROUP) by which to the existing software program units ($P_{e1}$, $P_{e2}$, ..., $P_i$, ..., $P_l$) a group of new software program units ($S_{new}$; $P_{n1}$, $P_{n2}$, $P_{ni}$, $P_{nl}$) is added;

**a3)** a unit replacement function step (REPPNEW) by which one of the existing software

program units ($P_{e1}$, $P_{e2}$, ..., $P_{ei}$, ..., $P_{en}$) is replaced by one new software program unit ($S_{new}$; $P_{n1}$, $P_{n2}$, $P_{ni}$, $P_{nn}$) ; and

**a4)** a group replacement function step (REPGROUP) by which a group of existing software program units ($P_{e1}$, $P_{e2}$, ..., $P_{ei}$, ..., $P_{en}$) is replaced by a group of new software program units ($S_{new}$; $P_{n1}$, $P_{n2}$, $P_{ni}$, $P_{nn}$).

**19.** A method according to claim 15,
*characterized by*
the step of defining a portion ($A_{new'}$) of the test application program system ($A_{new}$) to be tested, wherein said test message defining step (TMDM) defines at least one test message ($M_1$, $M_k$, $M_m$) to be exchanged between the at least one new software program unit ($P_{ni}$) and the other existing program units ($P_{ei}$) of the portion ($A_{new'}$).

**20.** A method according to claim 15,
*characterized in that*
said test message defining step (TMDM) is adapted for defining test message sequences (SM; SM1, SMp, SMs).

**21.** A method according to claim 15,
*characterized in that*
said test message defining step (TMDM) is adapted for defining said at least one test message ($M_{snd}$; $M_1$, $M_2$, $M_k$, ..., $M_m$) on the basis of a functional specification table relating to each software program unit.

**22.** A method according to claim 15,
*characterized in that*
said expected message defining step (EMDM) is adapted for defining said at least one expected message ($M_{snd}$; $M_1$, $M_2$, $M_k$, ..., $M_m$) on the basis of a functional specification table relating to each software program unit.

**23.** A method according to claim 15,
*characterized in that*
said expected message defining step (EMDM) is adapted for defining as said expected message ($M_{rec}$; $M_1$, $M_2$, $M_k$, ..., $M_m$) a message received from an old software program unit ($P_{ei}$) in response to transmitting a test message thereto.

**24.** A method according to claim 15,
*characterized in that*
said running step (RD) is adapted for running said existing and said new software program units simultaneously wherein said expected message defining step (EMDM) defines as the expected messages the messages produced by the software program units of the existing application program system

$(P_e)$.

**25.** A method according to claim 15,
said updating step (UP) is adapted for replacing an existing by a new software program unit one by one.

**26.** A method according to claim 25,
*characterized in that*
said updating step (UP) is adapted for replacing old software program units by new software program units in a sequence as groups.

**27.** A program having instructions adapted to carry out all the method steps of one or more of claims 15 - 26.

**28.** A computer program product stored on a computer readable storage medium comprising code means adapted to carry all the method steps of one or more of claims 15 - 26.

**29.** A computer readable medium having a program recorded thereon wherein said program is to be made the computer execute procedures to carry out the steps of one or more of the claims 15 - 26.

**30.** A computer readable medium having computer readable code embodied therein which comprises:

**a)** code means for building a test application program system ($A_{new}$) comprising at least one existing software program unit of an existing application program system and at least one ($S_{new}$) new software program unit ($P_{n1}$, $P_{n2}$, ..., $P_{nj}$, ..., $P_{nl}$) ;

**b)** code means for defining at least one (M) test message ($M_{snd}$; $M_1$, $M_2$, $M_k$, ... ,$M_m$) to be exchanged between the at least one new software program unit ($P_{nj}$) and at least one other existing program unit ($P_{ei}$) of the built test application program system ($A_{new}$) ;

**c)** code means for defining at least one (M) expected message ($M_{rec}$; $M_1$, $M_2$, $M_k$, ..., $M_m$) to be exchanged between the at least one new software program unit ($P_{ni}$) and the at least one other existing program unit ($P_{ei}$) in response to the test message ($M_{snd}$; $M_1$, $M_2$, $M_k$, ... ,$M_m$) ;

**d1)** code means for test running the test application program system ($A_{new}$) with the at least one test message ($M_1$, $M_2$, $M_k$, ..., $M_m$) ;

**d2)** code means for monitoring the messages exchanged in the test application program system ($A_{new}$) in response to the at least one test message;

**e)** code means for comparing the monitored messages with the expected messages ($M_{rec}$) ; and

**f)** code means updating the existing software program system ($A_{new}$) with the at least one new software program unit ($P_{new}$) when the compared messages match.

# *FIG.1a* PRIOR ART

HLR $P_{e1}$, $P_{e2}$

$P_{e3}$ -$P_{e6}$

GMSC1

$A_{exist}$

$P_{n4}$ REPLACE

MESSAGES

$\underline{SYS}$

REAL ENVIRONMENT
(TARGET SYSTEM)

$P_{e7}$

MSC/VLR ADD

$P_{new}$

# *FIG.1b* PRIOR ART

$A_{new}$

| $P_{e1}$ | $P_{e2}$ | $P_{e3}$ | $P_{e4}$ | $P_{e5}$ | $P_{e6}$ | $P_{e7}$ |

$P_{n4}$

$P_{new}$ ← ADD

REPLACE

TEST ENVIRONMENT ~TE

## *FIG.1c* PRIOR ART

```
          ┌─────────┐
          │  START  │
          └────┬────┘
               │
               ▼
    ┌─────────────────────┐
    │ SET UP EXISTING SYSTEM │── S1
    │ IN A TEST ENVIRONMENT  │
    └──────────┬──────────┘
               │
               ▼
    ┌─────────────────────┐
    │ ADD/REPLACE SOFTWARE │── S2
    │   PROGRAM UNITS      │
    └──────────┬──────────┘
               │
               ▼
    ┌─────────────────────┐
    │  TEST OF THE UPDATED │── S3
    │    SYSTEM IN TE      │
    └──────────┬──────────┘
               │
               ▼
    ┌─────────────────────┐
    │   MAINTENANCE OF     │── S4
    │ SOFTWARE PROGRAM UNITS │
    └──────────┬──────────┘
               │
               ▼
    ┌─────────────────────┐
    │   IMPLEMENT NEW      │── S5
    │  SYSTEM IN REAL ENV. │
    └──────────┬──────────┘
               │
               ▼
          ┌─────────┐
          │  STOP   │
          └─────────┘
```

# *FIG.2*

SYS

A_new

SOFTWARE MAINT.
DEVICE SMD

A_exist

OPERATING SYSTEM TS

# *FIG.3*

SYS

$S_{new}$ | $P_{n1}$ | $P_{n3}$ | $P_{n4}$ | $P_{nI+1}$ | $P_{nI+2}$

$A_{exist}$ | $P_{e1}$ | $P_{e2}$ | $P_{e3}$ | $P_{e4}$ | $\cdots$ | $P_{ei}$ | $P_{eI}$

EXISTING APPLICATION PROGRAM SYSTEM

$A_{new}$ | $P_{n1}$ | $P_{e2}$ | $P_{n3}$ | $P_{n4}$ | $\cdots$ | $P_{ei}$ | $P_{eI}$ | $P_{nI+1}$ | $P_{nI+2}$

TEST APPLICATION PROGRAM SYSTEM

$A_{new}$ (EXAMPLE OF A PORTION)

*FIG.4a*

*FIG.4b*

**FIG.5a**

Figure 5a — block diagram showing the systems SYS (with AEMEM containing messages $P_{e1}$, $P_{e2}$, $P_{e3}$, $P_{e4}$, $P_{eI}$, $P_{ei}$, $M_{snd}$, $M_{rec}$, MESSAGES, $A_{exist}$; AECM with $A_{exist}$ CONFIGURATION MEMORY) and SMD/MMD (VOTING LOGIC, MONITORING DEV., RUNNING DEV., CMP, RD). Monitoring domain MMD contains ANMEM with $P_{n1}$, $P_{nl+1}$, $P_{nl+2}$, $P_{n3}$, $P_{n4}$, $P_{e1}$, $P_{e2}$, $P_{e3}$, $P_{e4}$, $P_{eI}$, $P_{ei}$, $M_1$, $M_2$, $M_3$, $M_4$, $M_k$, $M_m$, $A_{new}$; TEST SYSTEM BUILDING DEVICE (TSBD); $S_{new}$ CONFIGURATION MEMORY (SNCM); TEST MESSAGE DEFINING DEVICE (TMDM); EXPECTED MESSAGE DEFINING DEVICE (EMDM); with signals OBSERVED, TRANSMITTED MESSAGE (STIMULUS), RESPONSE MESSAGES.

# FIG.5b

START

↓

BUILDING A TEST APPL.
PROGRAM SYSTEM — ST1

↓

DEFINING TEST MESSAGES — ST2

↓

DEFINING EXPECTED MESS. — ST3

BUILD
NEW
SYSTEM

↓

TEST RUN WITH MESS. — ST4

↓

MONITORING RESULTS — ST5

ST9

MAINTENANCE
PROCEDURE
(ERROR CORR.
ETC.)

↓

COMPARING RESULTS — ST6

↓

ST7
MONITORED
MESS. = EXPECTED MESS.
?

NO

YES — ST8

UPGRADE $A_{exist}$

END

# FIG.6a

| TEST MESSAGE APPLICATION DEVICE | ~TMAD |

| UNIT INSERTION DEVICE | GROUP INSERTION DEVICE | UNIT REPLAC. DEVICE | GROUP REPLAC. DEVICE | ~TSBD |

INPNEW    INGROUP    REPPNEW    REPGROUP

| TEST SYSTEM PORTION DEFINING DEVICE | ~TSPDM |

# FIG.6b

TBL1

| FUNCTION | STIMULUS MESSAGE |
|---|---|
|  |  |

TBL2

| STIMULUS | RESPONSE |
|---|---|
|  |  |

European Patent
Office

**EUROPEAN SEARCH REPORT**

Application Number

EP 01 12 4364

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 01 27710 A (NOKIA NETWORKS OY ;HARJUNEN TIMO (FI); KOIVULA REIJO (FI); HINTSAL) 19 April 2001 (2001-04-19) * abstract * * page 11, line 30 - page 12, line 35 * | 1-30 | G06F9/44 |
| A | US 5 410 703 A (KLOEFVER LEIF ET AL) 25 April 1995 (1995-04-25) * abstract; figure 4 * | 1-30 | |
| A | DE 198 03 697 A (ERICSSON TELEFON AB L M) 5 August 1999 (1999-08-05) * column 6, line 21 - column 7, line 12 * | 1-30 | |
| A | ENGRAM R L ET AL: "TRANSPARENT SOFTWARE AND HARDWARE CHANGES IN A TELECOMMUNICATION SYSTEM" INTERNATIONAL CONFERENCE ON SOFTWARE ENGINEERING FOR TELECOMMUNICATION SWITCHING SYSTEMS. LUND, 4-8 JULY 1983 I.E.E. PUBLICATION NR. 223, LONDON, I.E.E, GB, vol. CONF. 5, 4 July 1983 (1983-07-04), pages 157-162, XP002004485 * the whole document * | 1-30 | TECHNICAL FIELDS SEARCHED (Int.Cl.7) H04M G06F |

The present search report has been drawn up for all claims

| Place of search | Date of completion of the search | Examiner |
|---|---|---|
| THE HAGUE | 20 March 2002 | Renault, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.** EP 01 12 4364

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2002

| Patent document cited in search report | | Publication date | Patent family member(s) | | Publication date |
|---|---|---|---|---|---|
| WO 0127710 | A | 19-04-2001 | AU | 7925100 A | 23-04-2001 |
| | | | WO | 0127710 A2 | 19-04-2001 |
| US 5410703 | A | 25-04-1995 | AU | 667559 B2 | 28-03-1996 |
| | | | AU | 4516493 A | 31-01-1994 |
| | | | BR | 9306651 A | 08-12-1998 |
| | | | CN | 1081010 A ,B | 19-01-1994 |
| | | | CN | 1233011 A | 27-10-1999 |
| | | | DE | 69326464 D1 | 21-10-1999 |
| | | | DE | 69326464 T2 | 03-02-2000 |
| | | | DK | 648353 T3 | 03-04-2000 |
| | | | EP | 0648353 A1 | 19-04-1995 |
| | | | ES | 2140462 T3 | 01-03-2000 |
| | | | FI | 946195 A | 30-12-1994 |
| | | | GR | 3031915 T3 | 31-03-2000 |
| | | | MX | 9303648 A1 | 31-01-1994 |
| | | | NO | 945096 A | 22-02-1995 |
| | | | WO | 9401819 A1 | 20-01-1994 |
| | | | US | 5555418 A | 10-09-1996 |
| DE 19803697 | A | 05-08-1999 | DE | 19803697 A1 | 05-08-1999 |
| | | | AU | 2721499 A | 16-08-1999 |
| | | | WO | 9939266 A1 | 05-08-1999 |
| | | | EP | 1049974 A1 | 08-11-2000 |

For more details about this annex : see Official Journal of the European Patent Office, No. 12/82